# EUROPEAN PATENT APPLICATION

(11) **EP 4 610 489 A1**
(43) Date of publication of application: **03.09.2025**
(21) Application number: 24160426.3
(22) Date of filing: 29.02.2024
(51) Int. Cl.: F03G 7/06, F25B 23/00, F25B 30/00

(54) **APPARATUS COMPRISING AT LEAST TWO ELASTOCALORIC REGENERATORS AND HEATING/COOLING SYSTEM**

(71) Applicant: Continental Automotive Technologies GmbH, 30175 Hannover (DE)
(72) Inventor: Kircher, Andreas, 30175 Hannover (DE); Vasconcelos, José Miguel, 4200-162 Porto (PT)
(74) Representative: Aumovio Corporation

(57) **Abstract**

An apparatus comprising at least two elastocaloric regenerators (1, 1a, 1b), namely a first regenerator (1a) and a second regenerator (1b), a drive unit (11) and a control device. The drive unit (11) and control device are coupled to each of the elastocaloric regenerators (1, 1a, 1b). Each elastocaloric regenerator (1, 1a, 1b) comprises at least a SMA element (6, 6a, 6b), a heat exchange medium (5, 5a, 5b) and a first fixation element (7, 7a, 7b) to affix the SMA element (6, 6a, 6b). Each elastocaloric regenerator (1, 1a, 1b) is subject to a stress phase where the SMA element (6, 6a, 6b) is deformed via mechanical force generating heat energy and a relaxation phase where mechanical energy is released. The first and second regenerators (1, 1a, 1b) are coupled in such a way that the mechanical energy released by the first regenerator (1a) during its relaxation phase is at least partially used by the second regenerator (1b) during its stress phase to deform the SMA element (6, 6a, 6b) and vice versa. The first and second regenerators (1, 1a, 1b) are coupled via at least one spindle (2, 2a, 2b) and at least one nut (14, 14a, 14b).

## Description

The present invention relates to an apparatus comprising at least two elastocaloric regenerators, a drive unit and control device. The drive unit and control device are coupled to each of the elastocaloric regenerators. Each elastocaloric regenerator comprises at least a SMA element, a heat exchange medium and a fixation element to affix the SMA element. The invention also relates to a heating/cooling system comprising at least one such apparatus.

### Background

An elastocaloric regenerator generally comprises one or more elements of a shape memory alloy (SMA) such as Nickel Titanium which is periodically stressed (i.e. compressed or elongated) and then partly or fully released from stress. The inducement of stress causes crystallographic shearing deformation and a phase transformation from a high-temperature phase (austenite) to a low-temperature phase (martensite). The thus generated latent heat causes the SMA material to increase in temperature. The SMA is surrounded by a medium for heat exchange. The SMA elements in the generator are generally subject to the same load conditions.

It is known from DE 10 2019 113 696 A1 that two elastocaloric regenerators in a heating/cooling system can be coupled with a phase-shift using a cam chest gear drive system with a cam disc. The elastocaloric regenerators are arranged opposite to one another to improve thermodynamic efficiency of the system. A known disadvantage of the prior art is that the cam chest and cam disc drive system allow limited flexibility in controlling the force applied to the SMA elements. The applied force which affects the temperature of the SMA element can only be varied in increments dependent on the cam disc size. This causes difficulties in controlling the temperature of the SMA element. To avoid damaging the SMA, temperatures above the critical SMA temperature above which the SMA element is damaged should be avoided.

Document DE 10 2022 206 830.0 discloses an elastocaloric regenerator which is driven and controlled in such a way that the life of the SMA elements is maximized. One of the parameters, temperature of one heat exchange medium, temperature of one SMA element or electrical resistance of one SMA element, is monitored to establish a maximum force which may be applied to the SMA elements. The mechanical energy generated by the elastocaloric regenerator during the relaxation phase is converted into electrical energy. While this system has the advantage that the mechanical energy remains within the system, the mechanical energy is not used efficiently (e.g. conversion losses).

An elastocaloric regenerator in a cylinder form is disclosed in document DE 10 2016 118 776 A1. This system is used for heating and/or cooling. One disadvantage of this system is that the mechanical energy generated by the phase transformation from martensite to austenite is not utilized.

A thermoelastic cooling system is disclosed in US 2017/0138648 A1 where the thermoelastic member is made of a SMA and is realized as a solid refrigerant belt. This solid refrigerant belt is compressed between two rollers which act as heat sinks. The compressed belt enters a cold reservoir containing a cooling medium and thereby cools the cooling medium. This system also has the disadvantage of not utilizing the mechanical energy generated by the phase transformation from martensite to austenite.

The present invention thus aims at improving the efficiency, especially the mechanical energy efficiency, of an apparatus comprising two or more elastocaloric regenerators.

### Summary

It is therefore the object of the invention to provide an apparatus according to claim 1, where the first and second regenerators are coupled via at least one spindle and at least one nut. The spindle and nut feature at least a thread. Another aspect of the invention is a heating/cooling system comprising at least one such apparatus.

According to these independent claims the mechanical energy released during the relaxation phase of the SMA element is utilized as within the system as mechanical energy using a relatively simple spindle and nut arrangement. During the relaxation phase the SMA element returns to its original form or to an approximation thereof. It is more efficient if the mechanical energy is not converted into e.g. electrical energy. The mechanical energy of a first regenerator is coupled at least partially via the relatively simple spindle and nut arrangement into a second phase-shifted regenerator. That is to say, the mechanical force causing the deformation of the SMA element of the first regenerator derives from the mechanical energy released by a second regenerator and is possibly supplemented by a drive unit.

In addition, the spindle and nut arrangement allows the stress applied to the SMA elements to be controlled over a continuous stress range as opposed to in increments which is sometimes the case based on geometric restrictions of the coupling means. This has the advantage of flexibility in view of varying environmental parameters and allows a buffer (e.g. a temperature buffer) to be incorporated into the controlling of the drive unit to protect the SMA elements from e.g. overheating and subsequent damage. For this reason, the drive unit and/ or control device can be coupled to the spindle and/or nut.

The drive unit can be coupled to the elastocaloric regenerators via one or more gears and/or shafts. Alternatively, the elastocaloric regenerators can be coupled to the drive unit via at least one internal and external toothed gear.

Each of the regenerators of the apparatus include at least one SMA element which can be arranged between a first fixation element and a second fixation element. A fixation element is, for an example, a linear-motion bearing or linear slide which is designed to provide free motion in one direction. If the spindle and nut are arranged so that the spindle is moving at least axially, then spindle can be connected to the one fixation element directly or via a rod. If the spindle and nut are arranged so that the nut is moving at least axially, then the nut can be connected to the one fixation element. If the axially moving spindle or nut is also required to rotate, then a rotatable bearing is used for this connection to the fixation element.

The spindle can be attached to a rod which can be attached to one of the fixation elements. The use of shorter spindles can save manufacturing costs.

In a preferred embodiment of the invention, the first and second regenerators are coupled with a phase-shift. The phase-shift can be approximately 180 degrees.

The invention is further explained using the following exemplary embodiments of the invention.
- Figure 1: is a Table representing exemplary combinations and variations of the spindle and nut arrangement.
- Figure 2: represents Variation 1 of the Table in Figure 1 where two regenerators are coupled via an axially fixed rotating nut and an axially moving spindle which does not rotate.
- Figure 3: is a schematic diagram of the Variation 1 where the spindle is elongated using a rod.
- Figure 4: is a schematic diagram of the Variation 2 where the two regenerators are coupled via an axially moving nut which does not rotate and an axially fixed spindle which is free to rotate.
- Figure 5: is a schematic diagram of the Variation 3 where the two regenerators are coupled via a spindle which is fixed for rotation and axial movement and a nut which is free to rotate and to move axially.
- Figure 6: is a schematic diagram of the Variation 4 where the two regenerators are coupled via a nut which is fixed for rotation and axial movement and a spindle which is free to rotate and to move axially.
- Figure 7: is a schematic diagram of two regenerators which are coupled via a rack and pinion.
- Figure 8: is a schematic diagram of four regenerators coupled to one drive unit via a synchronized spindle and nut arrangement.
- Figure 9: is a 3D view of a shaft with gear and thread.

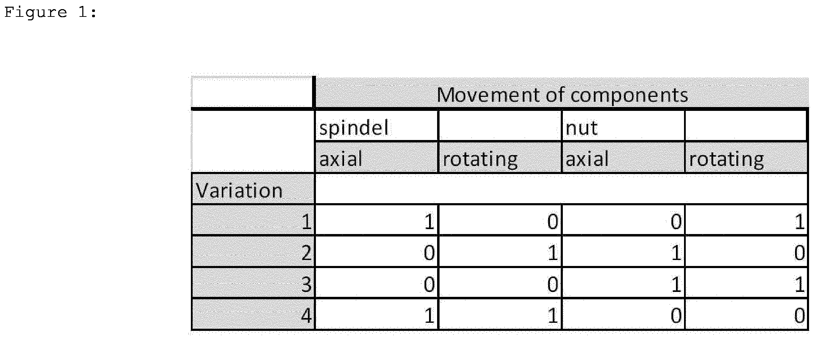

Figure 1 shows a table of some possible variations in how the spindle and nut are arranged. Some of these variations are described in more detail in the following example embodiments of the invention. The axial direction refers to the axis of the spindle which is in this case also parallel to the axis of the nut.

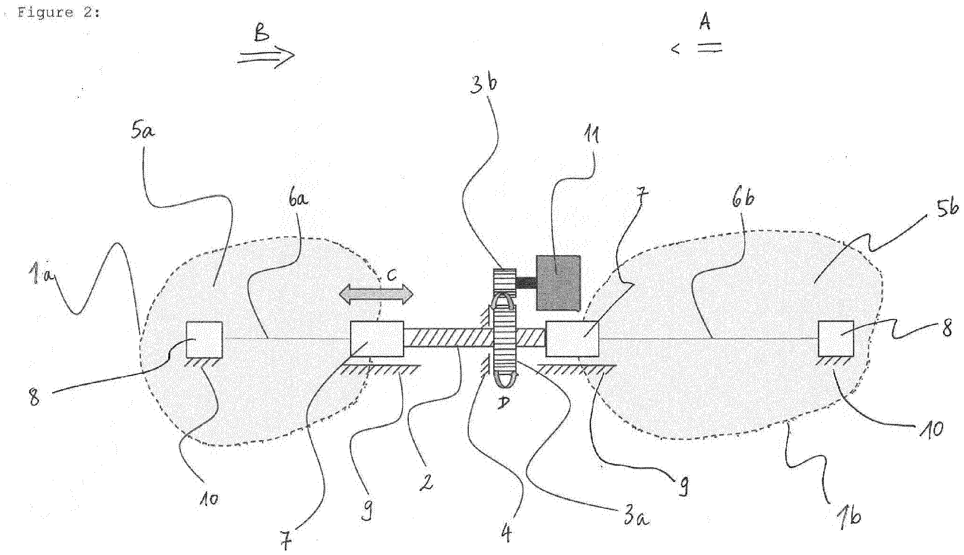

Figure 2 is a diagram representing Variation 1 (based on the Table in Figure 1) of the spindle-nut arrangement between two elastocaloric regenerators 1. In this example embodiment, the first regenerator 1a (represented on the left-hand side of the diagram) is coupled to the second regenerator 1b (represented on the right-hand side of the diagram) via a non-rotating, axially moving spindle 2 with a thread and a rotating nut. The nut located within a gear 3a and is not shown in Figure 2. The rotating nut is axially fixed, e.g. by a axial support 4 which allows rotation. Each regenerator 1, 1a, 1b includes a heat exchange medium 5 (hereinafter the first and second heat exchange media 5a, 5b respectively) and a SMA element 6 (hereinafter the first and second SMA elements 6a, 6b respectively) which is arranged between two respective fixation elements 7,8. In this case a first fixation element 7 is attached to the spindle 2 (floating fixation) and a second fixation element 8 is fixed e.g. to the housing (not shown) by a fixing means 10. The first fixation element 7 is supported by a fixation element guide 9 which includes torque support but allows axial movement. A SMA element 6 is arranged between the first and second fixation elements 7, 8.

Figure 2 represents one point in time where the second SMA element 6b is stressed by movement of the spindle to the left (tension) as indicated by arrow A driven by a drive unit 11 (e.g. a motor). The drive unit 11 may include a control unit, otherwise an additional control unit is required. The drive unit may be accompanied by gears 3a, 3b, belts and/or chains to transfer the applied force. The second SMA element 6b is thereby elongated and produces heat which is at least partially transferred via the second heat exchange medium 5b. The first SMA element 6a is in a relaxed state at ambient temperature which is approximately 180 degree phased-shifted from the state of the second regenerator 1b.

When the tension on the second SMA element 6b is released and the temperature of the second SMA element 6b decreases, a mechanical force is transmitted to the spindle 2 in the axial direction of arrow B (towards the right-hand side of the diagram). This mechanical force assists the drive unit in applying tension to the first SMA element via the spindle. The first SMA element 6a then becomes stressed, thereby producing heat which is at least partially transferred to the first heat exchange medium 5a and the second SMA element 6b is in a relaxed state.

The first and second heat exchange media 5a, 5b are hydraulically connected to optimize heat exchange for the system. The possible axial movement of e.g. the first fixation element 7 and spindle 2 is indicated by arrow C.

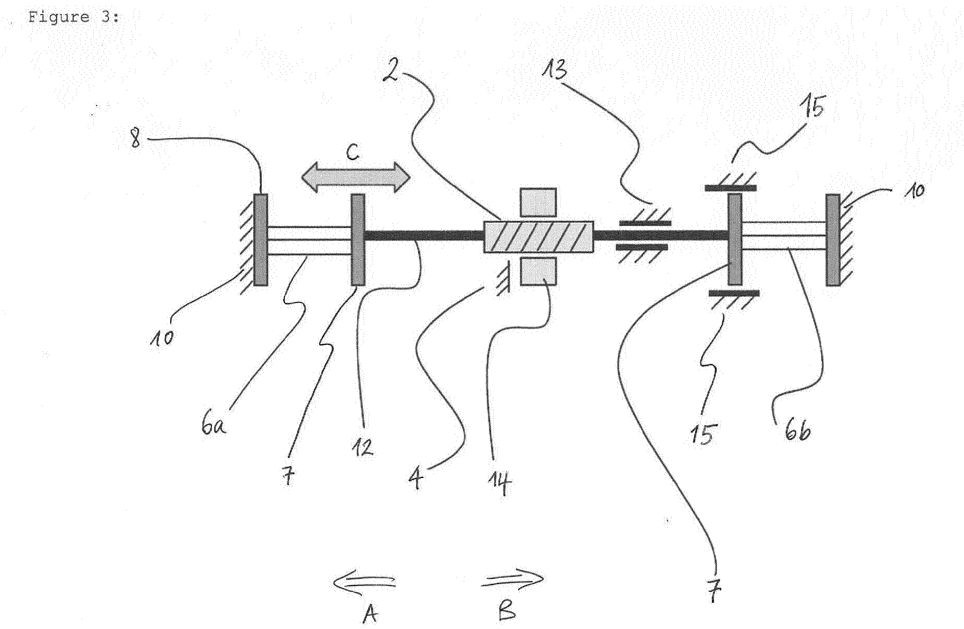

Figure 3 shows a similar arrangement in a simplified schematic diagram. In this embodiment the spindle 2 and first fixation elements 7 are connected via at least one rod 12. The rod can be supported by a rod guide 13 to ensure axial movement as indicated by arrow C. The nut 14 is free to rotate but is axially fixed. A number of SMA elements 6a, 6b is shown here in Figure 3 for each regenerator 1a, 1b, whereas for the sake of clarity, only one SMA element 6a, 6b is shown in the representation in Figure 2. To minimize rotation, the first fixation elements 7 can be equipped with fixation element guides 9.

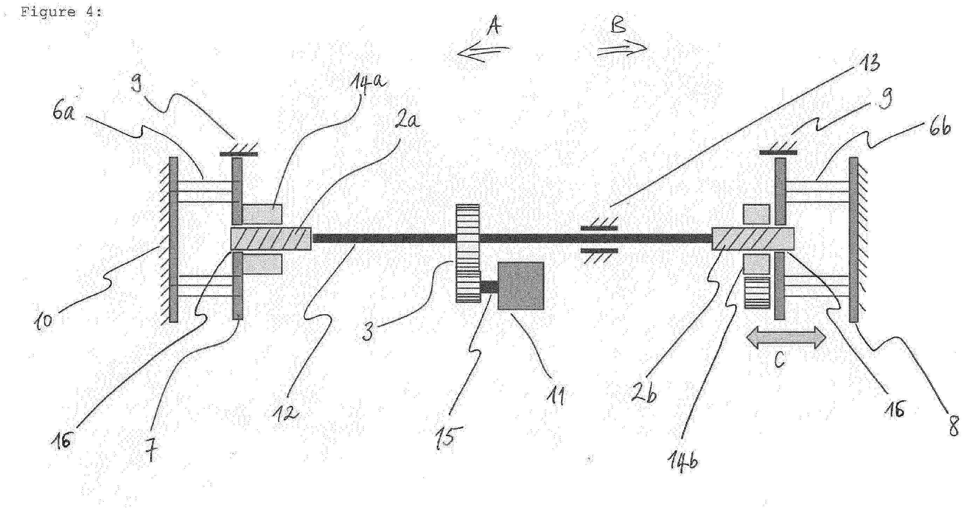

Variation 2 is shown in Figure 4 where the two spindles 2a, 2b are connected by a rod 12 and two nuts 14a, 14b are arranged so that each nut is attached to a respective first fixation element 7. The rod 12 is rotated by the drive unit 11 via gears 3 and a shaft 15. The nuts 14a, 14b do not rotate but move axially with the first fixation elements 7 (as indicated by arrow C) when the spindles 2a, 2b and rod 12 are rotated. The first fixation elements 7 can optionally feature an opening 16 through which the respective spindle 2a, 2b moves during axial movement. Without such an opening 16, the spindle 2a, 2b is situated further away from the respective first fixation element 7.

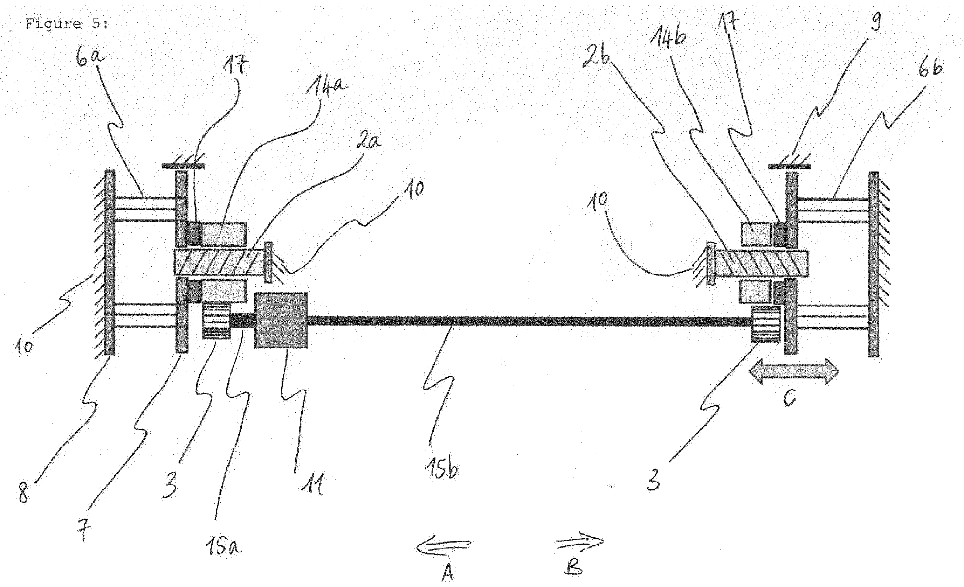

Figure 5 is a schematic representation of Variation 3 where two spindles 2a, 2b and two nuts 14a, 14b are arranged. The spindles 2a, 2b are fixed in terms of rotation and axial linear movement (e.g. is fixed to the housing) by a fixing means 10. The nuts 14a, 14b rotate and move axially back and forth as indicated by arrow C. The drive unit 11 drives the nuts 14a, 14b via at least two gears 3 and one or two shafts 15a, 15b. Each nut 14a, 14b is attached to the respective first fixation element 7 via a rotatable bearing 17 which allows rotation of the nut 14a, 14b and transmits mechanical force in the axial direction to the respective first fixation 7. The first fixation elements 7 therefore move linearly back and forth in the axial direction (as indicated by arrow C) with the respective nut 14a, 14b.

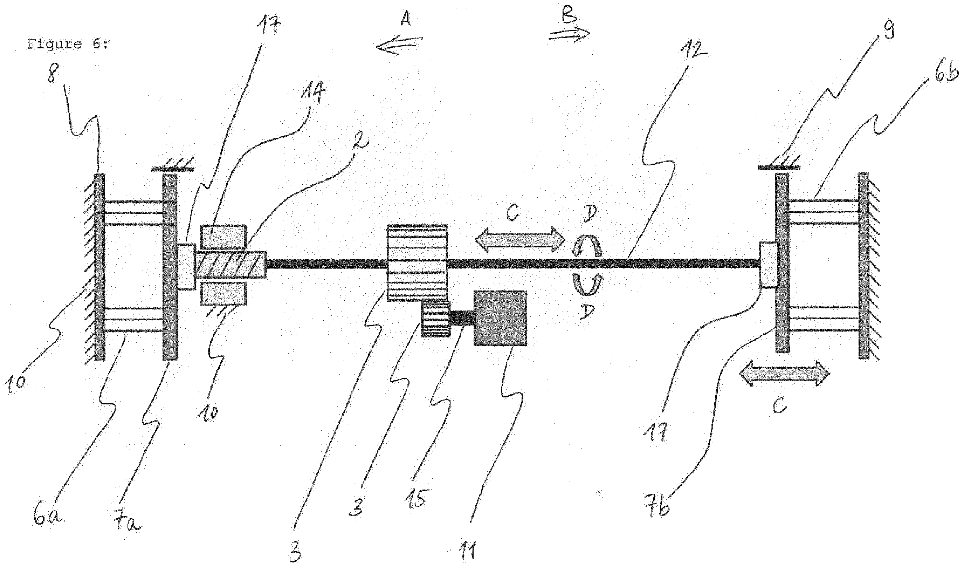

Variation 4 is schematically represented in Figure 6 with one nut 14 and one spindle 2. The nut 14 is fixed for rotation and axial linear movement (e.g. is fixed to the housing) by a fixing means 10. The spindle 2 rotates (as indicated by arrows D) and moves axially back and forth (as indicated by arrow C). The spindle 2 is attached to the first fixation element 7a of the first regenerator 1a via a rotatable bearing 17 which allows rotation of the spindle 2 and transmits mechanical force in the axial direction. The spindle 2 is attached to the first fixation element 7b of the second regenerator 1b through a rod 12. A rotatable bearing 17 arranged between the rod 12 and the first fixation element 7b allows rotation of the rod 12 and transmission of mechanical force in the axial direction. The first fixation elements 7a, 7b therefore move linearly back and forth in the axial direction (arrow C) with the spindle 2.

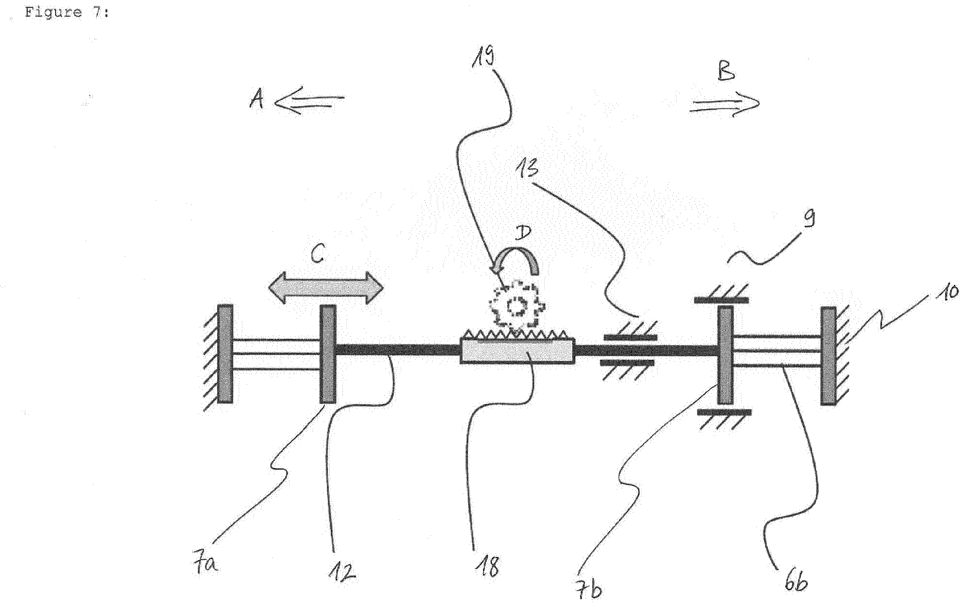

Figure 7 shows an embodiment of the invention featuring a rack 18 and pinion 19. The drive unit 11 servicing the pinion gear 19 is not shown. The rack is attached to the first fixation elements 7a, 7b of the first and second elastocaloric regenerators 1a, 1b via a rod 12. The rod 12 is equipped with axial guides 13 to confine the rod movement to movement in the axial direction (as indicated by arrow C). For example, clockwise rotation of the pinion gear 19 drives the rack 18 in the left-hand direction (as indicated by arrow A); anti-clockwise rotation of the pinion gear 19 (as indicated by arrow D) drives the rack 18 towards the right (as indicated by arrow B). The rack 18 and pinion 19 may be replaced by any other linear gear.

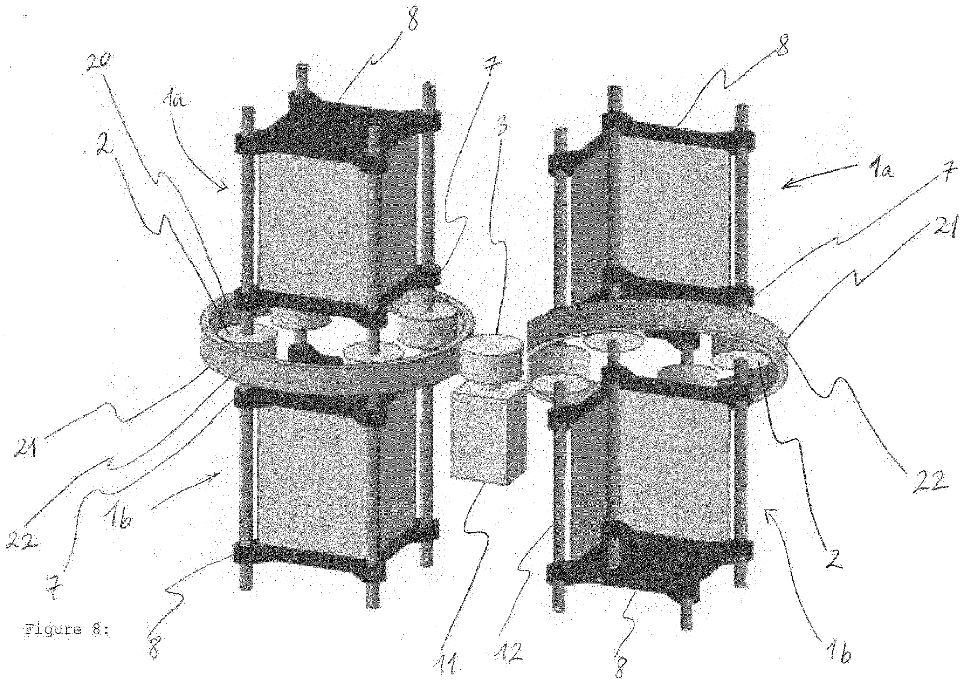

Figure 8 shows one example of coupling multiple elastocaloric regenerators 1, 1a, 1b in a synchronized fashion. In this case, four elastocaloric regenerators 1 are arranged in two pairs. Two regenerators 1a, 1b constituting a pair are coupled with the above described 180 degree phase-shift. The spindles 2 of one pair are coupled to one another using the internal teeth 20 of an internal and external toothed gear 21 where the internal teeth 20 engage with the spindles 2 and external teeth engage 22 with the driving unit 11 (e.g. motor). In this case, one drive unit drives eight spindles 2 in a synchronized fashion. This may be scaled up taking into account the capacity of the drive unit 11.

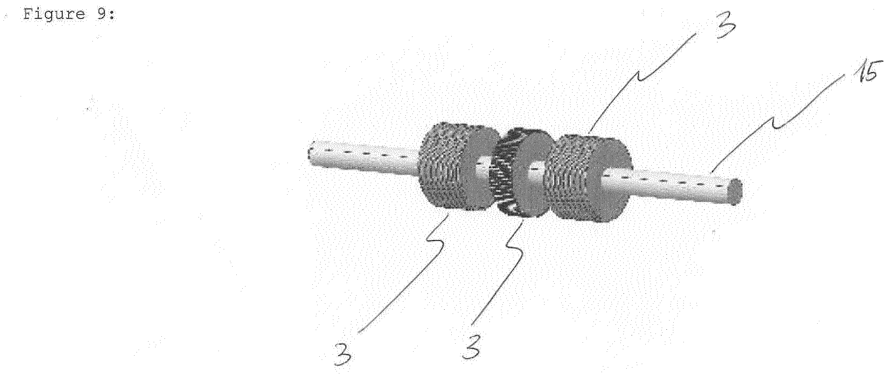

Figure 9 shows a 3D view of a shaft with gear and thread which may be used to drive the spindle or nut.

### Reference Numerals

- 1: elastocaloric regenerator
- 1a: first regenerator
- 1b: second regenerator
- 2: spindle
- 3: gear
- 4: axial support
- 5: heat exchange medium
- 6: SMA element
- 7: first fixation element
- 8: second fixation element
- 9: fixation element guide
- 10: fixing means
- 11: drive unit
- 12: rod
- 13: rod guide
- 14: nut
- 15: shaft
- 16: opening in first fixation element
- 17: rotatable bearing
- 18: rack
- 19: pinion
- 20: internal teeth
- 21: internal and external toothed gear
- 22: external teeth
- A: in the direction towards the left-hand side
- B: in the direction towards the right-hand side
- C: axial movement
- D: rotation

## Claims

1. An apparatus comprising at least two elastocaloric regenerators (1, 1a, 1b), namely a first regenerator (1a) and a second regenerator (1b), a drive unit (11)and control device wherein
- the drive unit(11) and control device are coupled to each of the elastocaloric regenerators (1, 1a, 1b),
- each elastocaloric regenerator (1, 1a, 1b) comprises at least a SMA element (6, 6a, 6b), a heat exchange medium (5, 5a, 5b) and a first fixation element (7, 7a, 7b) to affix the SMA element (6, 6a, 6b),
- each elastocaloric regenerator (1, 1a, 1b) is subject to a stress phase where the SMA element (6, 6a, 6b) is deformed via mechanical force generating heat energy and a relaxation phase where mechanical energy is released,
- the first and second regenerators (1a, 1b) are coupled in such a way that the mechanical energy released by the first regenerator (1a) during its relaxation phase is at least partially used by the second regenerator (1b) during its stress phase to deform the SMA element (6, 6a, 6b) and vice versa,
**characterized in that**
the first and second regenerators (1, 1a, 1b) are coupled via at least one spindle (2, 2a, 2b) and at least one nut (14, 14a, 14b).

2. An apparatus according to claim 1 where the SMA element (6, 6a, 6b) is arranged between a first fixation element (7, 7a, 7b) and a second fixation element (8).

3. An apparatus according to claim 1 or 2 where the drive unit (11) is coupled to the spindle (2, 2a, 2b) and/or nut (14, 14a, 14b).

4. An apparatus according to one of the previous claims where the spindle (2, 2a, 2b) is attached to a rod (12).

5. An apparatus according to one of the previous claims where the spindle (2, 2a, 2b) and nut (14, 14a, 14b) are arranged so that the spindle (2, 2a, 2b) is moving at least axially and the spindle (2, 2a, 2b) is connected to the first fixation element (7, 7a, 7b) directly or via a rod (12).

6. An apparatus according to one of the previous claims where the spindle (2, 2a, 2b) and nut (14, 14a, 14b) are arranged so that the nut (14, 14a, 14b) is moving at least axially and the nut (14, 14a, 14b) is connected to the first fixation element (7, 7a, 7b).

7. An apparatus according to one of the previous claims where the first and second regenerators (1, 1a, 1b) are coupled with a phase-shift of approximately 180 degrees.

8. An apparatus according to one of the previous claims where the SMA element (6, 6a, 6b) returns to its approximate original form during the relaxation phase.

9. An apparatus according to one of the previous claims where the drive unit (11) is coupled to the elastocaloric regenerators (1, 1a, 1b) via one or more gears (3) and/or shafts (15).

10. An apparatus according to one of the previous claims where the elastocaloric regenerators (1, 1a, 1b) are coupled to the drive unit (11) via at least one internal and external toothed gear (21).

11. A heating and/or cooling system comprising at least one apparatus according to claims 1 to 10.
